Europäisches Patentamt

European Patent Office

Office européen des brevets

(19)

(11) **EP 0 840 463 A1**

## (12) DEMANDE DE BREVET EUROPEEN

(43) Date de publication:
**06.05.1998 Bulletin 1998/19**

(51) Int Cl.$^6$: **H04B 1/12**

(21) Numéro de dépôt: **97402600.7**

(22) Date de dépôt: **31.10.1997**

(84) Etats contractants désignés:
**AT BE CH DE DK ES FI FR GB GR IE IT LI LU MC NL PT SE**
Etats d'extension désignés:
**AL LT LV RO SI**

(30) Priorité: **04.11.1996 FR 9613395**

(71) Demandeur: **TELEDIFFUSION DE FRANCE
75015 Paris (FR)**

(72) Inventeurs:
• **Jahan, Bruno
57950 Montigny-Les-Metz (FR)**
• **Bourcet, Patrice
57070 Metz (FR)**

(74) Mandataire: **Fréchède, Michel
Cabinet Plasseraud
84, rue d'Amsterdam
F-75440 Paris Cédex 09 (FR)**

(54) **Procédé et dispositif d'annulation des signaux interférents co-canaux et canaux adjacents de récepteurs FM**

(57) L'invention concerne un procédé et un dispositif d'annulation de signaux interférents co-canaux et canaux adjacents FM.

Le signal à fréquence intermédiaire F.I. du récepteur est transformé (1001, 1002) en signal numérique complexe ($X_{en}$, $Y_{en}$) et pour chaque échantillon de période courante, les signaux interférents sont discriminés (1003) par discrimination (1003a) et estimation (1003b) par filtrage adaptatif de signaux interférents discriminés ($X_{1n}$, $Y_{1n}$), le pilotage du filtrage adaptatif étant réalisé en fonction de l'erreur entre signaux interférents discriminés ($X_{1n}$, $Y_{1n}$) et estimés ($\hat{X}_{1n-1}$, $\hat{Y}_{1n-1}$). Le signal numérique complexe est corrigé (1004) à partir des signaux interférents estimés pour délivrer un signal utile (1005).

Application à la réception d'émissions radio FM.

FIG.1.

EP 0 840 463 A1

## Description

La présente invention concerne un procédé d'annulation des signaux interférents co-canaux et canaux adjacents de récepteurs en modulation de fréquence, récepteurs FM.

Conçue à l'origine pour une réception sédentaire, grâce à la mise en oeuvre d'une antenne située à environ dix mètres du sol au faîte du toit d'une maison, la radiodiffusion en modulation de fréquence a connu une évolution considérable, qui s'est accompagnée en outre de son mode d'utilisation, et, en conséquence, de ses conditions de réception.
En particulier, l'avènement des récepteurs FM portables ou transportables, lesquels peuvent être utilisés comme "baladeurs" ou lors de déplacements en véhicule automobile.

Une telle modification des modes d'utilisation de tels récepteurs n'a été suivie d'aucune modification sensible des principes qui régissent le processus de réception.

Ces modifications, majeures, sont au nombre de trois :

- L'avènement de l'émission/réception stéréophonique, laquelle s'est traduite par une adaptation compatible des émetteurs au niveau desquels une sous-porteuse modulée en amplitude par le signal de différence entre les signaux stéréophoniques gauche et droit a été introduite. Le parc des récepteurs FM non stéréophoniques recevait, à l'époque, un signal compatible monophonique, constitué par la somme des signaux gauche et droit. Ces récepteurs monophoniques ont été progressivement remplacés par les récepteurs stéréophoniques actuels.
- L'avènement de l'émission RDS, pour *"Radio Data System"* en langage anglo-saxon, qui s'est traduit par une modification compatible des émetteurs au niveau desquels une seconde sous-porteuse modulée en amplitude par un signal numérique a été introduite afin de fournir diverses informations susceptibles d'améliorer, d'une part, le fonctionnement et l'utilisation des récepteurs, et, d'autre part, diverses gammes de services à l'utilisateur outre la seule réception des programmes audiofréquence diffusés. Les récepteurs FM RDS sont de plus en plus nombreux.
- L'avènement des réseaux de diffusion radio monofréquence, selon le procédé dit de la FM synchrone, qui s'est traduit par une modification des émetteurs FM, au niveau desquels on a introduit une synchronisation fine à l'émission permettant d'accorder, le long d'un parcours routier par exemple, tous les émetteurs émettant le même programme sur une même fréquence. Une telle modification est bien entendu totalement compatible avec le parc des récepteurs existants.

La première des modifications précitées a amélioré la qualité de restitution du son lorsque les conditions de réception sont bonnes. Elle a toutefois légèrement dégradé la qualité de réception dans les conditions difficiles, compte tenu d'une plus grande sensibilité globale du système aux conditions de transmission et aux perturbations de l'environnement radioélectrique.

Les deux autres modifications sont encore en cours de développement. Elles visent avant tout à résoudre le problème de la réception FM par un récepteur mobile, lequel, pour recevoir un même programme au cours d'un déplacement, doit recevoir des signaux en provenance d'émetteurs distincts, dès que ce récepteur mobile quitte la zone de couverture utile de chaque émetteur.
Dans le cas du système RDS, c'est le récepteur, voire l'utilisateur, qui cherche en permanence à recevoir le meilleur signal porteur du programme diffusé demandé, grâce aux données d'identification introduites à l'émission. Dans le cas de la FM synchrone, ce sont les émetteurs qui, synchronisés de proche en proche, fournissent en permanence au récepteur mobile un même programme diffusé sur une même fréquence, par exemple le long d'une autoroute.
Pour une description plus détaillée du processus d'émission dit en FM synchrone, on pourra utilement se reporter aux demandes de brevet français n° 90 02629/ 2 659 181 publiée le 6 septembre 1991 et PCT/ FR93/00390 publiée sous le n° WO 9321701, déposée au nom de TELEDIFFUSION DE FRANCE.

Toutefois, aucune amélioration sensible n'a jamais été apportée au processus de radio-diffusion FM dans le but de combattre les effets néfastes d'une réception difficile, en présence d'une ou plusieurs sources d'émission, sur la qualité de restitution du programme diffusé.

L'un des problèmes majeurs reste, en effet, celui des interférences entre plusieurs émetteurs diffusant leurs signaux sur des canaux de diffusion centrés sur des fréquences identiques ou voisines.
Dans le premier cas, l'interférence est dite co-canal et se produit lorsque le rapport de protection lié, pour un récepteur FM donné, à la différence entre le canal source utile et le signal perturbateur est insuffisant pour que le récepteur concerné puisse récupérer correctement le signal source désiré. Une telle situation se produit lorsque deux émetteurs émettent sur un même canal alors que la distance qui les sépare est insuffisante pour permettre un niveau de réception suffisamment distinct de l'un et l'autre des signaux reçus sur le même canal. Cette situation est toutefois peu différente de celle où un seul émetteur diffuse un signal empruntant plusieurs chemins de propagation distincts pour atteindre le même récepteur. Le phénomène d'interférence est alors provoqué par des échos du signal source utile. Ces échos se comportent en effet comme des signaux issus d'émetteurs co-canaux virtuels émettant une réplique du signal source utile à des instants différents.
Dans le deuxième cas, l'interférence est dite canal adjacent, la gêne étant provoquée par l'émission d'un émetteur sur un canal dont la fréquence est voisine de celle de la source utile. Là encore, ce phénomène d'interférence se produit lorsque le rapport de protection pour le récepteur concerné, lié à la différence entre le signal source utile et le signal perturbateur, est insuffisant pour que ce récepteur puisse recevoir et détecter correctement le signal source désiré. Une telle situation se produit notamment lorsque le récepteur mobile se situe à grande distance de la source utile mais à distance proche de l'émetteur du signal perturbateur non désiré. Dans ces conditions, le récepteur considéré reçoit un signal source utile relativement faible en provenance de la source accordée sur son canal mais il reçoit toutefois un signal relativement fort en provenance de l'émetteur perturbateur qui émet sur un canal voisin. En effet, bien que l'amplitude maximale de l'émetteur perturbateur ne soit pas dans le canal de l'émetteur désiré, ce signal perturbateur peut être encore d'une amplitude non négligeable, suffisante pour être reçue et détectée par le récepteur, pour deux raisons : soit l'émetteur perturbateur ne respecte pas strictement la valeur de fréquence de son canal d'émission, soit le récepteur mobile n'est pas suffisamment sélectif.

A l'heure actuelle, tout auditeur moyennement attentif peut constater l'existence des problèmes correspondants habituellement rencontrés par exemple en matière de qualité de restitution des programmes radiodiffusés, notamment en milieu urbain ou en milieu rural. Outre la sortie du récepteur mobile de la zone de couverture utile d'un émetteur source, une bonne partie de ces problèmes est liée aux différents phénomènes d'interférences, dûs à la présence des très nombreux émetteurs qui doivent, en fait, se partager la bande de fréquences qui leur a été allouée. Bien que certains traitements numériques visant notamment à améliorer le rapport signal à bruit des signaux reçus soient susceptibles d'être mis en oeuvre, afin d'améliorer la qualité de la restitution des programmes diffusés, il n'existe actuellement pas de solution susceptible de permettre une atténuation significative, voire une annulation, des signaux interférents, dans le cas de la modulation et de la réception FM analogique. En particulier, la technique souvent utilisée dans le cas de la modulation numérique, basée sur un algorithme à module constant et connue sous le nom de CMA *(Constant Modulus Algorithm,* en langage anglo-saxon), ne permet toutefois pas de corriger les échos ou les signaux interférents qui ont la même amplitude que le signal utile.

La présente invention a pour objet la mise en oeuvre d'un procédé et d'un dispositif d'annulation de signaux interférents co-canaux et canaux adjacents des récepteurs FM.

Un autre objet de la présente invention est en outre l'amélioration des performances de tous les récepteurs, en particulier les récepteurs FM, conçus pour récupérer une information portée par tout signal radioélectrique périodique d'amplitude constante, modulé en phase ou en fréquence afin d'assurer la diffusion de cette information.

Un autre objet de la présente invention est également la mise en oeuvre d'un procédé et d'un dispositif d'annulation de signaux interférents co-canaux et canaux adjacents permettant, de manière particulièrement remarquable, d'effectuer une séparation, au niveau de chaque récepteur mobile ou non, du signal source, signal utile, et du ou des signaux interférents, signaux perturbateurs ou brouilleurs.

Le procédé et le dispositif d'annulation de signaux interférents co-canaux et canaux adjacents d'une onde électromagnétique modulée en fréquence représentative d'un signal source, objets de la présente invention, sont remarquables en ce que, suite à une étape de transformation de cette onde électromagnétique modulée en fréquence par transposition en un signal à fréquence intermédiaire, ils permettent, respectivement consistent au moins à transformer le signal à fréquence intermédiaire en un signal numérique par échantillonnage et conversion analogique-numérique de période déterminée, ce signal numérique étant formé d'une suite d'échantillons numériques successifs, et à transformer ce signal numérique en un signal numérique complexe comportant une partie réelle et une partie imaginaire, puis, pour chaque échantillon de période courante, à discriminer l'ensemble des signaux interférents co-canaux et canaux adjacents pour engendrer des signaux interférents discriminés par estimation par un filtrage adaptatif de l'ensemble des signaux interférents sur au moins la période d'échantillonnage précédant la période d'échantillonnage courante, ce filtrage adaptatif étant réalisé en fonction de l'erreur entre signaux interférents discriminés et les signaux interférents estimés. Le signal numérique complexe est corrigé à partir des signaux interférents estimés pour délivrer un signal utile, représentatif du signal source dans lequel les signaux interférents sont supprimés.

Le procédé et le système, objets de la présente invention, trouvent application à l'amélioration de la qualité de réception de tout récepteur radio d'une information portée par un signal radioélectrique périodique d'amplitude constante modulé en phase ou en fréquence.

Ils seront mieux compris à la lecture de la description et à l'observation des dessins ci-après, dans lesquels :

- la figure 1 représente un organigramme général illustrant les différentes étapes permettant la mise en oeuvre du procédé d'annulation de signaux interférents co-canaux et canaux adjacents d'une onde électromagnétique modulée en fréquence représentative d'un signal source objet de la présente invention ;
- la figure 2a représente, sous forme d'un diagramme synoptique fonctionnel, un premier mode de mise en oeuvre du procédé objet de la présente invention, en vue d'une première réalisation matérielle correspondante ;

- la figure 2b représente, sous forme d'un diagramme synoptique fonctionnel, un deuxième mode de mise en oeuvre du procédé objet de la présente invention, en vue d'une deuxième réalisation matérielle correspondante ;

- la figure 3a représente un schéma fonctionnel d'un dispositif d'annulation de signaux interférents co-canaux et canaux adjacents d'une onde électromagnétique modulée en fréquence, représentative d'un signal source, objet de la présente invention, opérant conformément au procédé tel qu'illustré en figure 2a ;

- la figure 3b représente un détail de réalisation du dispositif représenté en figure 3a ;

- la figure 3c représente la répartition spectrale du signal multiplex en bande de base obtenue pour le signal utile, et, le cas échéant, pour le signal brouilleur ;

- la figure 4a représente un schéma fonctionnel d'un dispositif d'annulation de signaux interférents co-canaux et canaux adjacents d'une onde électromagnétique modulée en fréquence représentative d'un signal source, objet de la présente invention, opérant conformément au procédé tel qu'illustré en figure 2b ;

- la figure 4b représente un détail de réalisation du dispositif, objet de la présente invention, tel que représenté en figure 4a.

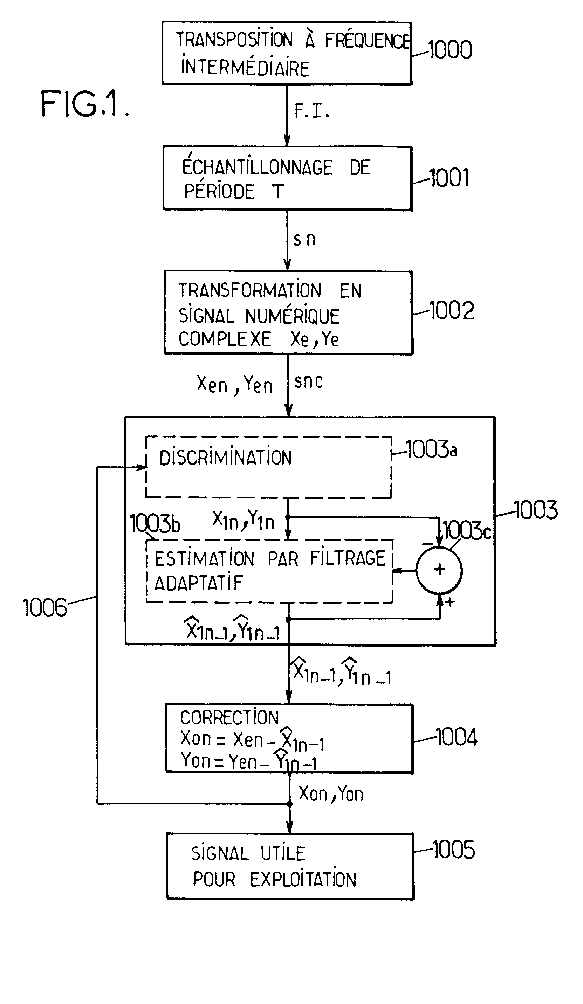

Une description plus détaillée du procédé d'annulation de signaux interférents co-canaux et canaux adjacents d'une onde électromagnétique modulée en fréquence représentative d'un signal source, conforme à l'objet de la présente invention, sera maintenant donnée en liaison avec la figure 1.

Ainsi qu'on l'observera sur la figure précitée, suite à une étape de transformation de l'onde électromagnétique modulée en fréquence par transposition en un signal à fréquence intermédiaire, noté signal F.I., étape notée 1000 sur la figure 1, le procédé objet de la présente invention, consiste, en une étape 1001, à transformer ce signal à fréquence intermédiaire F.I. en un signal numérique par échantillonnage et conversion analogique-numérique de période T donnée. Ce signal numérique, noté sn, est formé d'une suite d'échantillons numériques successifs.

Le procédé selon l'invention consiste ensuite, en une étape 1002, à transformer ce signal numérique sn en un signal numérique complexe, noté snc, comportant une partie réelle $X_e$ et une partie imaginaire $Y_e$.

Les étapes 1001 d'échantillonnage de période T et 1002 de transformation en signal numérique complexe peuvent être réalisées par des processus classiques, connus de l'homme de l'art, ces processus classiques, en ce qui concerne l'étape 1002, pouvant consister en un processus de filtrage de Hilbert et d'une transposition à fréquence nulle, ainsi qu'il sera décrit de manière plus détaillée ultérieurement dans la description.

L'étape 1002 précitée est elle-même suivie d'une étape notée 1003, consistant à discriminer pour chaque échantillon de période courante du signal numérique complexe, ces échantillons étant notés $X_{en}$, $Y_{en}$, l'ensemble des signaux interférents co-canaux et canaux adjacents pour engendrer des signaux interférents discriminés et des signaux interférents estimés par estimation par un filtrage adaptatif de l'ensemble des signaux interférents sur au moins la période d'échantillonnage précédant la période d'échantillonnage courante précédemment citée.

Ainsi que représenté de manière plus détaillée sur la figure 1, l'étape 1003 précitée peut comprendre une sous-étape de discrimination proprement dite, notée 1003a, et une sous-étape de filtrage adaptatif, notée 1003b, ce filtrage adaptatif étant réalisé en fonction de l'erreur, calculée en une sous-étape 1003c, entre les signaux interférents discriminés obtenus à la sous-étape 1003a et les signaux interférents estimés obtenus à la sous-étape 1003b.

Sur la figure 1, les signaux interférents discriminés sont notés $X_{1n}$, $Y_{1n}$, ces signaux étant obtenus à l'issue de l'étape 1003a, et les signaux interférents estimés sont notés $\hat{X}_{1n-1}$, $\hat{Y}_{1n-1}$, ces paramètres désignant bien entendu les composantes réelles et imaginaires correspondantes des signaux interférents discriminés et des signaux interférents estimés, respectivement.

En ce qui concerne le mode opératoire de l'étape 1003 précitée, on comprend que la convergence du filtrage adaptatif 1003b est obtenue pour une valeur sensiblement égale des signaux interférents estimés et des signaux interférents discriminés. La notation correspondante $X_{1n}$, $Y_{1n}$ pour les signaux interférents discriminés et $\hat{X}_{1n-1}$, $\hat{Y}_{1n-1}$ pour les signaux interférents estimés indique que, pour tout échantillon de période courante de rang n, la discrimination correspondante des signaux interférents et la valeur des paramètres de parties réelles et de parties imaginaires de ce dernier sont obtenues à partir de la valeur correspondante des paramètres de parties réelles et de parties imaginaires des signaux interférents estimés sur au moins la période d'échantillonnage n-1 précédant cette période d'échantillonnage courante.

On indique à titre d'exemple non limitatif que le choix de la seule période d'échantillonnage précédant la période d'échantillonnage courante, c'est-à-dire le choix du rang n, n-1 des valeurs discriminées et estimées, dépend avant tout de la période d'échantillonnage T du signal à fréquence intermédiaire à l'étape 1001.

Pour une période d'échantillonnage T correspondant à une fréquence d'échantillonnage de 320 kHz, on indique qu'il est suffisant de prendre en compte la seule période d'échantillonnage précédant la période d'échantillonnage courante pour effectuer le processus de discrimination des signaux interférents co-canaux et canaux adjacents dans le cadre de la mise en oeuvre du procédé objet de la présente invention.

Des essais réalisés également à partir de la période antérieure à la période d'échantillonnage précédant la période d'échantillonnage courante, c'est-à-dire la période d'échantillonnage de rang n-2, ont été effectués avec des résultats positifs. Enfin, il peut être envisagé de combiner l'une et l'autre, voire plusieurs des périodes d'échantillonnage précédant la période d'échantillonnage courante en fonction de l'application considérée.

Suite à l'étape 1003 précitée, le procédé selon l'invention, ainsi que représenté en figure 1, consiste alors à corriger le signal numérique complexe pour délivrer en fait un signal utile. Cette étape de correction porte la référence 1004 sur la figure 1 et consiste en fait à effectuer le processus de correction correspondant à partir des signaux interférents estimés pour délivrer un signal utile, en une étape 1005, selon un multiplex de fréquence directement utilisable par le récepteur, dans lequel les signaux interférents co-canaux et canaux adjacents du signal source ont été supprimés.

L'étape de correction 1004 met en oeuvre un processus de soustraction aux composantes réelles et imaginaires du signal complexe des composantes réelles et imaginaires des signaux interférents estimés. Les composantes réelles et imaginaires du signal corrigé mises en oeuvre pour l'obtention du signal utile à l'étape 1005 vérifient la relation :

$$X_{0n} = X_{en} - \hat{X}_{1n-1}$$

$$Y_{0n} = Y_{en} - \hat{Y}_{1n-1}.$$

Une étape de retour 1006 à la sous-étape de discrimination proprement dite 1003a, permet, à partir des composantes réelles et imaginaires du signal numérique complexe $X_{en}$, $Y_{en}$ et des composantes réelles et imaginaires du signal corrigé $X_{0n}$, $Y_{0n}$, d'obtenir, à l'issue de cette sous-étape 1003a, les signaux interférents discriminés $X_{1n}$, $Y_{1n}$ vérifiant la relation :

$$X_{1n} = X_{en} - X_{0n}$$

$$Y_{1n} = Y_{en} - Y_{0n}.$$

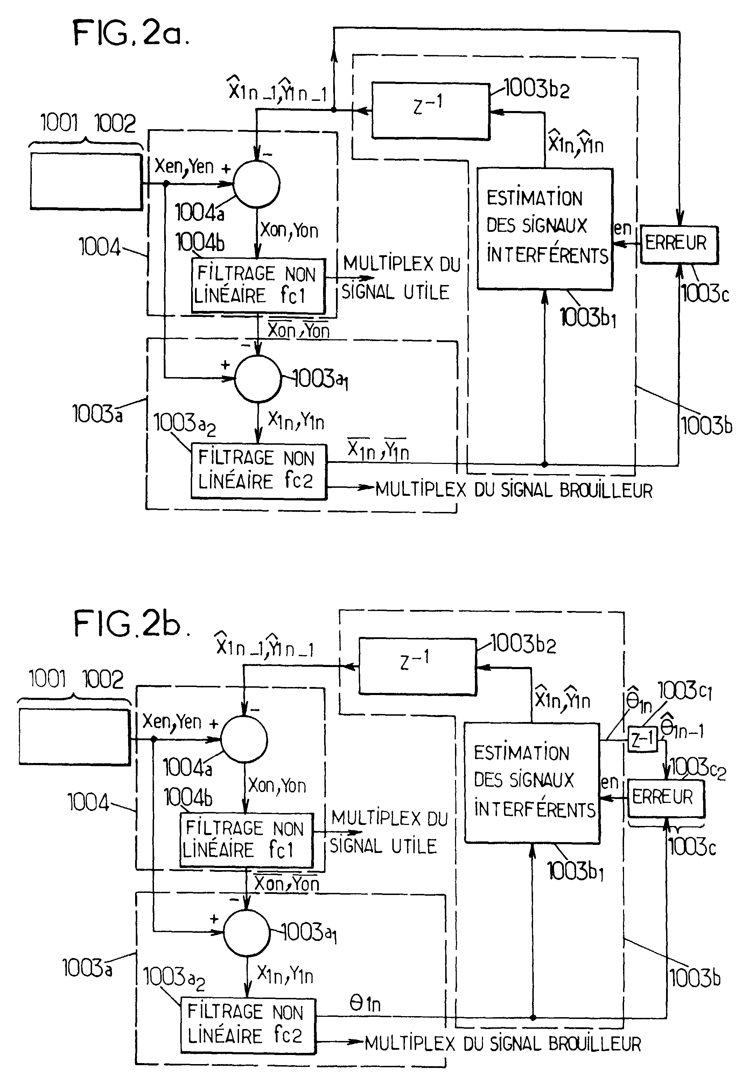

Une description plus détaillée d'un mode de mise en oeuvre particulier du procédé objet de la présente invention sera maintenant donnée en liaison avec la figure 2a.

Sur la figure 2a, les étapes correspondantes de la figure 1 ont été reportées mais la mise en oeuvre de ces étapes a été représentée sous forme de schéma fonctionnel afin d'en simplifier la compréhension.

Ainsi que représenté sur la figure précitée, la discrimination sur chaque échantillon de période courante de l'ensemble des signaux interférents co-canaux et canaux adjacents pour engendrer des signaux interférents discriminés par estimation par un filtrage adaptatif consiste, grâce à la sous-étape 1003b représentée en figure 1, à engendrer un signal interférent estimé, noté $\hat{X}_{1n-1}$, $\hat{Y}_{1n-1}$, à partir du filtrage adaptatif des signaux interférents discriminés sur au moins la période d'échantillonnage précédant la période d'échantillonnage courante.

La discrimination consiste alors à engendrer un signal numérique complexe source, conformément à l'étape 1004 précédemment citée en relation avec la figure 1, grâce à une sous-étape 1004a, ce signal complexe source correspondant au signal corrigé, par différence entre le signal numérique complexe $X_{en}$, $Y_{en}$ et le signal interférent estimé $\hat{X}_{1n-1}$, $\hat{Y}_{1n-1}$.

Le signal numérique complexe source $X_{0n}$, $Y_{0n}$ issu de la sous-étape 1004a est ensuite soumis à un premier filtrage non linéaire, en une sous-étape 1004b, permettant d'engendrer un signal numérique complexe source à module sensiblement constant, noté $\overline{X}_{0n}$, $\overline{Y}_{0n}$, la notation $\overline{\phantom{x}}$ indiquant le caractère sensiblement constant du module du signal précité. Par filtrage non linéaire, on entend un filtrage appliqué sur un paramètre représentatif du module, c'est-à-dire de l'enveloppe du signal numérique complexe source, et non pas sur le paramètre représentatif de la phase de ce même signal, ainsi qu'il sera décrit ultérieurement dans la description.

Les sous-étapes 1004a et 1004b sont alors suivies, dans le cadre de la sous-étape 1003a de la figure 1, d'une sous-étape consistant à engendrer un signal numérique complexe d'interférence, sous-étape notée 1003al sur la figure 2a, par différence entre le signal numérique complexe $X_{en}$, $Y_{en}$, et le signal numérique complexe source à module sensiblement constant $\overline{X}_{0n}$, $\overline{Y}_{0n}$. La sous-étape 1003al précitée permet d'obtenir le signal numérique d'interférence $X_{1n}$, $Y_{1n}$ précédemment mentionné dans la description en relation avec la figure 1. Le signal numérique complexe d'interférence précité est alors soumis, en une sous-étape 1003a2, à un deuxième filtrage non linéaire, lequel permet d'engendrer un signal complexe d'interférence à module sensiblement constant, ce signal étant noté $\overline{X}_{1n}$, $\overline{Y}_{1n}$ sur la figure 2a et constituant les signaux interférents discriminés pour la période d'échantillonnage courante. On indique bien entendu que la notion de filtrage non linéaire, relative au deuxième filtrage non linéaire, correspond à la notion de premier filtrage non linéaire appliquée au signal numérique complexe source pour obtenir le signal numérique complexe source à module sensiblement constant précédemment décrit. Ce deuxième filtrage non linéaire est également appliqué sur le paramètre de module ou d'enveloppe du signal numérique complexe d'interférence $X_{1n}$, $Y_{1n}$ à l'exclusion de tout filtrage sur le paramètre de phase du signal précité.

Les premier et deuxième filtrages non linéaires mis en oeuvre consistent, dans un mode de réalisation préférentiel, à appliquer sur le module du signal numérique

complexe source $X_{0n}$, $Y_{0n}$, respectivement sur le module du signal numérique complexe d'interférence $X_{1n}$, $Y_{1n}$, un premier et un deuxième filtrage passe-bas respectivement, de fréquence de coupure $fc_1$, $fc_2$. De préférence, le rapport des fréquences de coupure $fc_1/fc_2$ est pris inférieur ou égal à 1. On comprend ainsi que la fréquence de coupure $fc_1$ du premier filtrage non linéaire peut être prise égale à 50 Hz, le filtrage passe-bas ainsi appliqué permettant de supprimer toute variation erratique du paramètre de module du signal numérique complexe source, ce qui bien entendu permet de restituer ce signal numérique complexe source émis à l'origine grâce à un processus de modulation à module constant, les variations de modules dues aux phénomènes d'interférence étant sensiblement supprimées.

Le deuxième filtrage non linéaire permet d'appliquer un filtrage de type passe-bas beaucoup plus lâche, la fréquence de coupure étant par exemple prise égale à $fc_2 = 200$ Hz, ce qui permet, grâce à la valeur plus élevée de cette fréquence de coupure, de prendre en compte un ou plusieurs des signaux interférents issus d'une ou plusieurs sources canaux adjacents par exemple.

Dans le mode de mise en oeuvre du procédé objet de la présente invention tel que représenté en figure 2a, on indique que le signal utile constitué en un multiplex de fréquences peut être obtenu à partir du paramètre de phase non filtré du signal numérique complexe source $X_{0n}$, $Y_{0n}$. Ce signal numérique complexe source permet alors d'obtenir une restitution sonore sensiblement exempte de signaux interférents, ce qui permet bien entendu d'améliorer de la façon la plus nette la qualité d'écoute en réception.

Il en est de même en ce qui concerne les signaux interférents ou signal brouilleur, et selon une caractéristique particulièrement remarquable et inattendue du procédé objet de la présente invention, il est ainsi possible "d'écouter" le signal brouilleur lorsque les signaux interférents sont constitués par un seul émetteur engendrant une interférence canal adjacent par exemple.

Un deuxième mode de mise en oeuvre du procédé objet de la présente invention sera maintenant décrit en liaison avec la figure 2b. Sur la figure précitée, on indique que les mêmes références représentent les mêmes étapes de processus de traitement que dans le cas de la figure 2a et de la figure 1.

Toutefois, alors que dans le cas de la mise en oeuvre de la figure 2a, l'ensemble des opérations de filtrage adaptatif des signaux interférents discriminés porte à la fois sur la partie réelle et sur la partie imaginaire du signal numérique complexe interférent, et en particulier du signal numérique complexe interférent à module sensiblement constant, ce qui implique la mise en oeuvre d'un filtrage adaptatif tant sur les composantes réelles qu'imaginaires de ce signal et donc un volume de calcul correspondant important, le deuxième mode de mise en oeuvre de la figure 2b permet de simplifier le mode de filtrage adaptatif dans la mesure où le filtrage ne porte que sur des signaux numériques à partie réelle, ainsi qu'il sera décrit ci-après dans la description.

Sur la figure 2b précitée, outre les étapes ou sous-étapes 1003b, 1004, les sous-étapes 1004a, 1004b, 1003a et les sous-étapes 1003a1, 1003a2, on indique que dans ce deuxième mode de mise en oeuvre, le procédé selon l'invention consiste également à engendrer, en particulier au niveau de la sous-étape 1003a2, un signal représentatif de la dérivée temporelle de l'argument de phase du signal numérique complexe d'interférence, et en particulier du signal numérique complexe d'interférence à module sensiblement constant, ce signal représentatif de la dérivée temporelle de l'argument de phase étant noté $\theta_{1n}$ pour la période d'échantillonnage courante précitée.

Dans un tel cas, ainsi que représenté en figure 2b, le filtrage adaptatif porte sur la valeur du paramètre représentatif de la dérivée temporelle de cet argument de phase, en particulier sur les valeurs réelles de celui-ci.

Alors que dans le cas de la mise en oeuvre de la figure 2a, les signaux interférents estimés pour la période d'échantillonnage courante $\hat{X}_{1n-1}$, $\hat{Y}_{1n-1}$ étaient obtenus par simple retard d'une période d'échantillonnage à partir de signaux interférents estimés sur la période d'échantillonnage courante $\hat{X}_{1n}$, $\hat{Y}_{1n}$ délivrés par l'étape de filtrage adaptatif proprement dit, dans le cas du deuxième mode de réalisation de la figure 2b, le filtrage adaptatif proprement dit sur le paramètre représentatif de la dérivée temporelle de l'argument de phase du signal numérique complexe d'interférence, paramètre $\theta_{1n}$, permet d'estimer à l'étape 1003bl non seulement les parties réelles et imaginaires du signal numérique complexe d'interférence $\hat{X}_{1n}$, $\hat{Y}_{1n}$ sur la période d'échantillonnage courante, puis par le retard d'une période d'échantillonnage en 1003b2 pour la période d'échantillonnage courante sur la période d'échantillonnage précédente $\hat{X}_{1n-1}$, $\hat{Y}_{1n-1}$, mais également d'estimer la valeur du paramètre représentatif de la dérivée temporelle de l'argument de phase sur la période d'échantillonnage courante $\hat{\theta}_{1n}$, puis par un nouveau retard d'une période d'échantillonnage sur la période d'échantillonnage précédant la période d'échantillonnage courante, paramètre désigné par $\hat{\theta}_{1n-1}$. Le filtrage adaptatif est piloté à la sous-étape 1003c en fonction de l'erreur entre le paramètre estimé $\hat{\theta}_{1n-1}$ et le paramètre discriminé $\theta_{1n}$ représentatif de la dérivée temporelle de l'argument de phase du signal numérique complexe d'interférence précité.

Un justificatif théorique du premier mode de mise en oeuvre puis du deuxième mode de mise en oeuvre du procédé objet de la présente invention, sera maintenant donné ci-après.

Dans le cas du premier mode de mise en oeuvre, le signal numérique complexe Se de composantes réelle et imaginaire $X_{en}$, $Y_{en}$ pour la période d'échantillonnage courante vérifie la relation :

$$Se = \sum_{i=0}^{N} S_i$$

Dans la relation précédente, le symbole $\Sigma$ représente le phénomène d'interférence des émetteurs brouilleurs avec le signal source $S_0$, les signaux $S_1$ à $S_N$ représentant les signaux interférents co-canaux ou canaux adjacents.

Dans tous les cas, chaque signal élémentaire vérifie la relation :

$$S_i(t) = A_i(t) \times \exp(j\Phi_i(t))$$

où $A_i$ est l'amplitude et $\Phi_i$ est la phase du signal de rang correspondant, exp représentant la fonction exponentielle.

Le procédé objet de la présente invention dans son mode de mise en oeuvre conformément au schéma synoptique de la figure 2a, permet en fait d'isoler chaque signal élémentaire, ou, à tout le moins, le signal source et la somme des signaux interférents constituant en fait le signal numérique complexe d'entrée.

Conformément à un aspect particulièrement remarquable du procédé objet de la présente invention, il est possible de séparer chaque signal constitutif du signal d'entrée, au prix toutefois d'un volume de calculs très important.

Le premier et le deuxième filtrage non linéaires, grâce à la mise en oeuvre des filtres passe-bas précités, permettent de stabiliser l'ensemble du processus de discrimination et d'estimation, lequel, conformément aux représentations sur les figures 1, 2a et 2b, est un processus en boucle fermée. Les filtrages passe-bas mis en oeuvre sont des filtres du premier ordre et leur fréquence de coupure détermine en fait le degré de liberté sur les amplitudes des signaux considérés normalement comme des signaux à module constant en l'absence d'interférence.

Le processus de filtrage et de discrimination des signaux interférents tient compte du fait que le processus de modulation de fréquence des signaux émis est un processus à module constant, le filtrage passe-bas réalisé sur le module du signal numérique complexe source présentant, pour cette raison, une fréquence de coupure plus basse que celle du deuxième filtrage de type passe-bas, permettant d'isoler la somme des signaux interférents co-canaux ou canaux adjacents.

Le filtrage adaptatif permet en fait d'estimer la valeur des signaux interférents pour la période d'échantillonnage courante sur les signaux relatifs à la période d'échantillonnage précédant cette période d'échantillonnage courante. Les coefficients du filtrage adaptatif sont alors remis à jour par l'intermédiaire du calcul de l'erreur entre les signaux interférents discriminés, en particulier le signal interférent complexe à module sensiblement constant, et les signaux interférents estimés, ainsi que mentionné précédemment dans la description.

En ce qui concerne le signal utile directement exploitable par le récepteur FM, on indique que celui-ci peut être obtenu sous forme de multiplex à partir du signal de phase du signal numérique complexe source, ainsi que mentionné précédemment. L'opération de passage du signal numérique complexe source au signal multiplex directement utilisable par le récepteur peut être réalisée grâce à un processus de boucle à verrouillage de phase, ainsi qu'il sera décrit ci-après dans la description.

En ce qui concerne le deuxième mode de mise en oeuvre du procédé, objet de la présente invention, représenté en figure 2b, le processus de discrimination est sensiblement le même que dans le mode de mise en oeuvre de la figure 2a. Toutefois, l'estimation au niveau du filtrage adaptatif porte cette fois sur le paramètre de la valeur de la dérivée de l'angle de phase du signal numérique complexe interférent.

Dans ce cas, le processus de filtrage adaptatif vérifie la relation :

$$\hat{\theta}_{1n} = H(\theta_{1n-1}, e_{n-1})$$

avec

$$e_{n-1} = \theta_{1n} - \hat{\theta}_{1n-1}.$$

Dans les relations précitées, H désigne la fonction de transfert du filtrage adaptatif et $e_n$ désigne l'erreur à valeur simplement réelle pour l'instant d'échantillonnage courant de rang n.

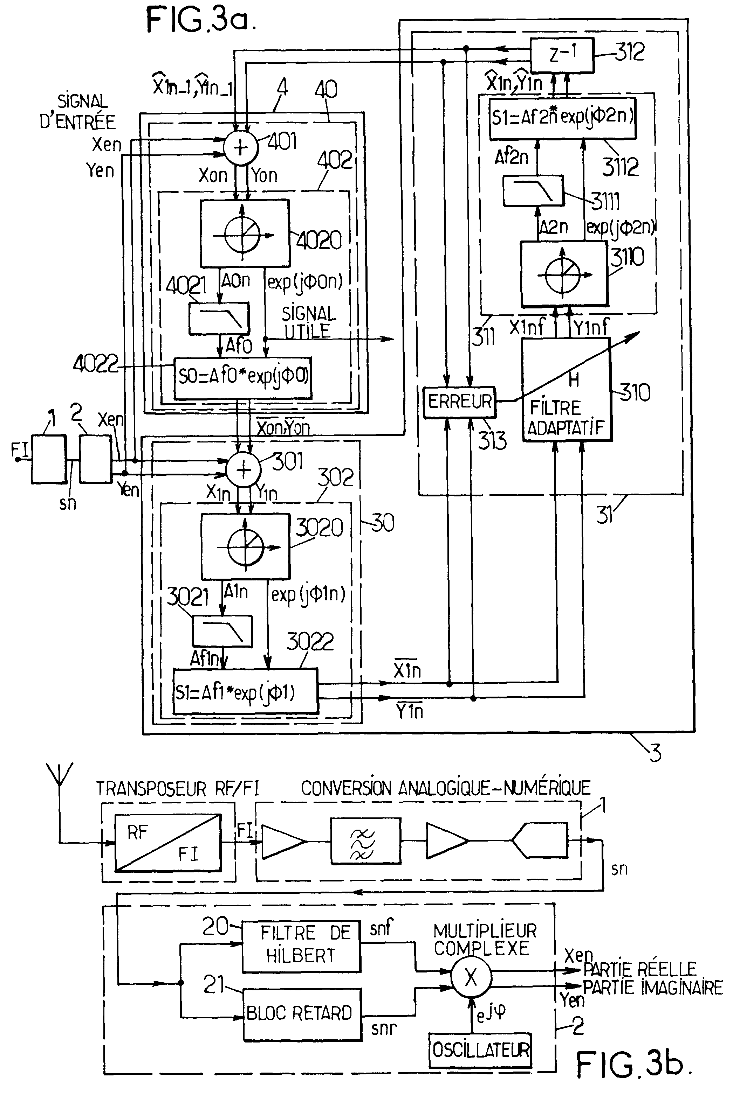

Une description plus détaillée d'un dispositif permettant d'obtenir l'annulation de signaux interférents co-canaux et canaux adjacents grâce à la mise en oeuvre du procédé objet de la présente invention, tel que décrit en liaison avec les figures 1 et 2a, sera maintenant donnée en liaison avec la figure 3a.

Ainsi que représenté sur la figure précitée, le dispositif objet de la présente invention comprend, interconnecté à la sortie de l'étage à fréquence intermédiaire d'un récepteur FM délivrant un signal à fréquence intermédiaire, un module 1 de conversion analogique-numérique délivrant à partir du signal à fréquence intermédiaire F.I. un signal numérique sn formé de la suite d'échantillons numérisés successifs précédemment mentionnés dans la description. Le module 1 est suivi d'un module 2 de transformation du signal numérique sn en un signal numérique complexe, le signal Se précédemment mentionné de composante réelle $X_{en}$, respectivement imaginaire $Y_{en}$.

Le dispositif selon l'invention comporte en outre un module 3 discriminateur sur chaque échantillon de période courante de l'ensemble des signaux interférents co-canaux et canaux adjacents, ce module permettant d'engendrer à partir du signal numérique complexe $X_{en}$, $Y_{en}$, des signaux interférents discriminés par estimation par un filtrage adaptatif de l'ensemble des signaux interférents sur au moins la période d'échantillonnage précédant la période d'échantillonnage courante, ce filtrage adaptatif étant réalisé en fonction de l'erreur entre les signaux interférents discriminés et les signaux interférents estimés.

Enfin, un module 4 de correction du signal numérique complexe $\hat{X}_e$, $Y_e$ à partir des signaux interférents estimés $\hat{X}_{1n-1}$, $\hat{\theta}_{1n-1}$, est prévu, ce module de correction permettant de délivrer un signal utile correspondant à l'onde électromagnétique modulée en fréquence, ou signal source, dans laquelle les signaux interférents cocanaux et canaux adjacents sont supprimés.

Ainsi qu'on l'a en outre représenté en figure 3b, le module 2 de transformation du signal numérique en un signal numérique complexe peut comprendre avantageusement un filtre de Hilbert 20 recevant le signal numérique sn et délivrant un signal numérique filtré snf. Le module 2 comporte en outre un circuit de retard 21 recevant le signal numérique sn et délivrant un signal numérique retardé snr. Un module de transposition 22 à fréquence nulle reçoit, outre un signal d'oscillateur local délivrant une sous-porteuse de référence, le signal numérique filtré snf et le signal numérique retardé snr, permet de délivrer le signal numérique complexe $X_{en}$, $Y_{en}$. Le module 2 de transformation du signal numérique en un signal numérique complexe ne sera pas décrit plus en détail car il correspond à une technique connue de l'homme de l'art.

Ainsi qu'on l'observera en outre sur la figure 3a, le module 3 discriminateur comporte un module 30 soustracteur/discriminateur recevant le signal numérique complexe source, en particulier le signal numérique complexe source à module sensiblement constant précédemment mentionné dans la description, ainsi que le signal numérique complexe $X_{en}$, $Y_{en}$. On rappelle que le signal numérique complexe source à module sensiblement constant $\overline{X}_{0n}$, $\overline{Y}_{on}$ constitue en fait le signal corrigé. Le module soustracteur/discriminateur 30 délivre des signaux interférents discriminés $X_{1n}$, $Y_{1n}$ et en particulier le signal numérique complexe à module sensiblement constant $\overline{X}_{1n}$, $\overline{Y}_{1n}$ précédemment mentionné dans la description pour la période d'échantillonnage courante.

Le module discriminateur 3 comporte en outre un module 31 d'estimation des signaux interférents estimés pour la période d'échantillonnage courante, ce module recevant les signaux interférents discriminés précités, en particulier le signal numérique complexe interférent à module sensiblement constant $\overline{X}_{1n}$, $\overline{Y}_{1n}$, et délivre les signaux interférents estimés, c'est-à-dire le signal numérique complexe estimé $\hat{X}_{1n-1}$, $\hat{Y}_{1n-1}$ pour la période d'échantillonnage courante, le module d'estimation étant piloté par le signal d'erreur différence entre le signal numérique complexe interférent estimé et le signal numérique complexe interférent à module sensiblement constant, c'est-à-dire des signaux interférents discriminés.

En ce qui concerne le module de correction 4, on indique, ainsi que représenté sur la figure 3a, que celui-ci comprend un module soustracteur/correcteur 40 recevant, outre le signal numérique complexe $X_{en}$, $Y_{en}$, les signaux interférents estimés, c'est-à-dire le signal numérique complexe interférent estimé $\hat{X}_{1n-1}$, $\hat{Y}_{1n-1}$ pour la période d'échantillonnage courante. Le module soustracteur/correcteur 40 délivre un signal corrigé complexe, c'est-à-dire le signal numérique complexe source constitutif du signal corrigé et comportant une partie réelle $X_{0n}$ et une partie imaginaire $Y_{0n}$.

Dans un mode de réalisation préférentiel, on indique que le module soustracteur/discriminateur 30 comporte au moins un module soustracteur complexe 301 recevant le signal numérique complexe $X_{en}$, $Y_{en}$, et le signal numérique complexe source à module sensiblement constant $\overline{X}_{0n}$, $\overline{Y}_{0n}$, ce module soustracteur complexe 301 délivrant le signal numérique complexe d'interférence $X_{1n}$, $Y_{1n}$.

En outre, le module soustracteur/discriminateur 30 comporte un module de filtrage non linéaire 302 recevant le signal numérique complexe d'interférence $X_{1n}$, $Y_{1n}$ et délivrant le signal numérique complexe d'interférence à module sensiblement constant $\overline{X}_{1n}$, $\overline{Y}_{1n}$.

De la même manière, le module soustracteur/correcteur 40 comporte avantageusement un module soustracteur complexe 401 recevant le signal numérique complexe $X_{en}$, $Y_{en}$, ainsi que le signal interférent estimé, c'est-à-dire le signal numérique complexe interférent estimé $\hat{X}_{1n-1}$, $\hat{Y}_{1n-1}$ pour délivrer le signal numérique complexe source $X_{0n}$, $Y_{0n}$ précédemment mentionné.

Outre le module soustracteur complexe 401, le module 40 soustracteur/correcteur comporte également un module de filtrage non linéaire recevant le signal numérique complexe source $X_{0n}$, $Y_{0n}$ et délivrant le signal numérique complexe source à module sensiblement constant $\overline{X}_{0n}$, $\overline{Y}_{0n}$ précédemment mentionné dans la description.

Dans un mode de réalisation particulièrement avantageux, on indique que le module de filtrage non linéaire 402 du module soustracteur/correcteur 40 et le module de filtrage non linéaire 302 du module soustracteur/discriminateur 30 sont réalisés selon la même architecture, ainsi qu'il apparaît à l'observation de la figure 3a.

Ils comportent chacun un module de conversion de coordonnées cartésiennes en coordonnées polaires, référencés 4020 respectivement 3020, ces modules consistant chacun en un dispositif électronique de type table de consultation dans lequel tout signal d'entrée tel que le signal numérique complexe source $X_{0n}$, $Y_{0n}$ ou le signal numérique complexe d'interférence $X_{1n}$, $Y_{1n}$ permet de délivrer en sortie du module 4020, respectivement 3020, l'amplitude $A_{0n}$, $A_{1n}$ respectivement l'argument de phase $\exp(j\Phi_{0n})$, $\exp(j\Phi_{1n})$ de ce signal d'entrée. En outre, les modules de filtrage non linéaires précités comportent également, en sortie du signal d'amplitude $A_{0n}$, respectivement $A_{1n}$, un filtre passe-bas référencé 4021 respectivement 3021 délivrant un signal de module filtré noté $Af_{0n}$ respectivement $Af_{1n}$. Bien entendu, les filtres passe-bas précités sont les filtres dont les fréquences de coupures sont respectivement égales à $fc_1$ respectivement $fc_2$ ainsi que mentionné précédemment dans la description. Ils peuvent être avantageusement constitués par des filtres du premier ordre de type filtre à réponse impulsionnelle infinie *"Butterworth"*.

Enfin, les deux modules de filtrage non linéaires précités comportent chacun un module de reconstruction, notés 4022 respectivement 3022, recevant chacun, d'une part, le signal de module filtré $Af_{0n}$, $Afin$ ainsi que l'argument de phase $\exp(j\Phi_{0n})$, $\exp(j\Phi_{1n})$ respectivement. Les modules de reconstruction 4022 et 3022 délivrent respectivement le signal numérique source et le signal numérique d'interférence à module sensiblement constant $\overline{X}_{0n}$, $\overline{Y}_{0n}$ et $\overline{X}_{1n}$, $\overline{Y}_{1n}$.

En ce qui concerne le module 31 d'estimation des signaux interférents estimés, on indique que, dans un mode de réalisation préférentiel, celui-ci comporte un filtre adaptatif proprement dit 310, lequel reçoit sur son entrée de filtrage les signaux interférents discriminés et en particulier le signal numérique complexe interférent à module sensiblement constant $\overline{X}_{1n}$, $\overline{Y}_{1n}$ pour la période d'échantillonnage courante, ce filtre adaptatif délivrant des signaux interférents filtrés, notés $X_{1nf}$, $Y_{1nf}$ sur la figure 3a précitée.

Le module 31 d'estimation des signaux interférents estimés peut comporter un module 311 de reconstruction recevant les signaux interférents filtrés $X_{1nf}$, $Y_{1nf}$ et délivrant des signaux interférents estimés sur la période d'échantillonnage courante, ces signaux étant notés sur la figure 3a, $\hat{X}_{1n}$, $\hat{Y}_{1n}$.

Dans un mode de réalisation simplifié, on indique toutefois que le module 311 de construction peut être supprimé, le module de filtrage adaptatif 310 délivrant directement les signaux interférents filtrés $X_{1nf}$, $Y_{1nf}$, lesquels constituent alors les signaux interférents estimés sur la période d'échantillonnage courante.

Toutefois, dans un mode de réalisation préférentiel, on indique que le module 311 de reconstruction peut avantageusement être réalisé sur un mode d'architecture semblable à celui des modules de filtrage non linéaires 302 et 402 précédemment décrits. Dans un tel cas, le module 311 comprend un circuit de conversion de coordonnées cartésiennes en coordonnées polaires 3110, un filtre passe-bas 3111 recevant le signal représentatif du module des signaux délivrés par le dispositif de conversion de coordonnées cartésiennes en coordonnées polaires 3110, et un module de reconstruction proprement dit 3112. Le filtre passe-bas 3111 peut alors avantageusement être identique au filtre passe-bas 3021 utilisé dans le module de filtrage non linéaire 302.

Le module 31 d'estimation des signaux interférents comprend en outre un circuit retardateur 312 d'au moins une période d'échantillonnage recevant les signaux interférents estimés sur la période d'échantillonnage courante, c'est-à-dire les signaux $\hat{X}_{1n}$, $\hat{Y}_{1n}$ délivrés par le module 311, ce circuit retardateur délivrant les signaux interférents estimés sur au moins la période d'échantillonnage précédente constitutive des signaux interférents estimés pour la période d'échantillonnage courante $\hat{X}_{1n-1}$, $\hat{Y}_{1n-1}$.

Enfin, le module 31 d'estimation des signaux interférents comprend un circuit soustracteur complexe 313 recevant les signaux interférents discriminés, en particulier le signal numérique complexe d'interférence à module sensiblement constant $\overline{X}_{1n}$, $\overline{Y}_{1n}$, ainsi que les signaux interférents estimés précités $\hat{X}_{1n}$, $\hat{Y}_{1n}$ pour délivrer un signal d'erreur de pilotage pour la période d'échantillonnage courante en, ainsi que mentionné précédemment dans la description.

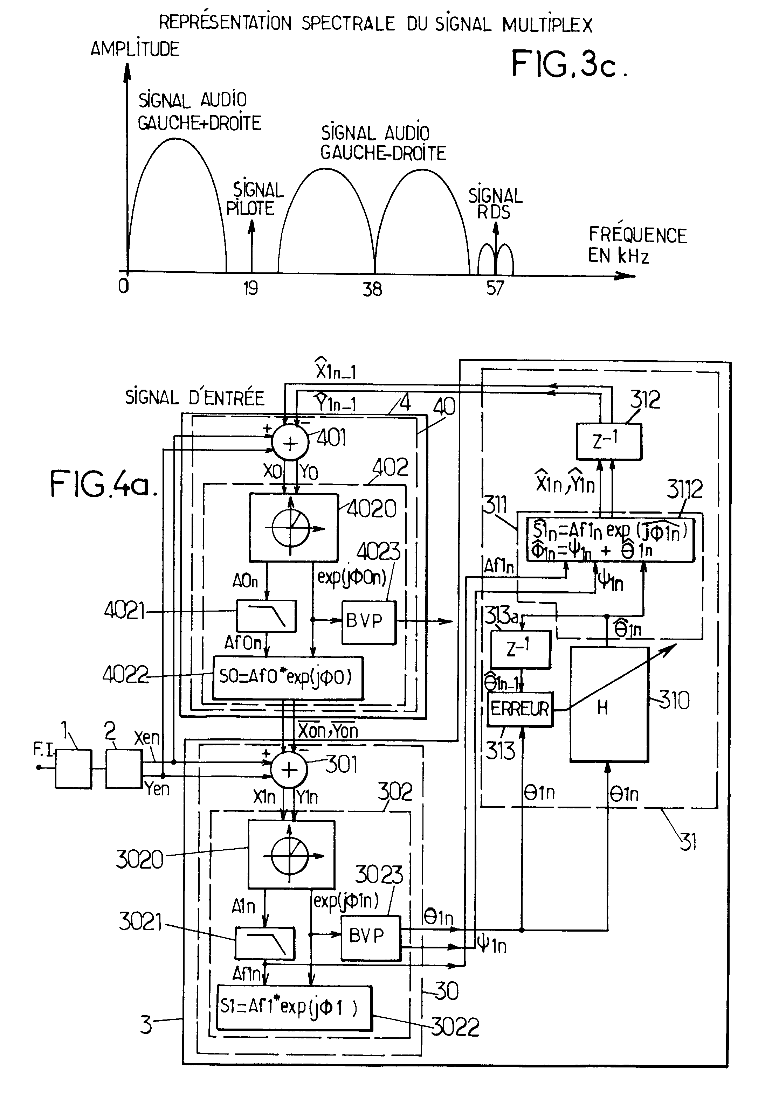

En ce qui concerne l'extraction du signal utile, celui-ci peut avantageusement être obtenu sous forme du signal multiplex directement utilisable par le récepteur FM, la répartition spectrale du signal multiplex étant représentée en figure 3c. On comprend en particulier, à l'observation de la figure 3a, que ce signal utile peut être obtenu à partir du signal d'argument de phase délivré par le circuit de conversion des coordonnées cartésiennes en coordonnées polaires 4020 délivrant le signal d'argument de phase $\exp(j\Phi_{0n})$ du signal numérique complexe source $X_{0n}$, $Y_{0n}$ à partir d'une boucle à verrouillage de phase par exemple. Les dispositifs du type boucle à verrouillage de phase sont connus de l'état de la technique et, pour cette raison, ce type de dispositifs ne sera pas décrit en détail pour la mise en oeuvre de l'extraction du signal utile.

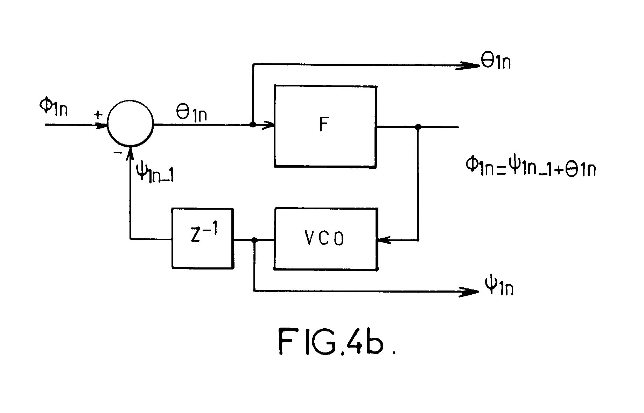

Un deuxième mode de réalisation du dispositif objet de la présente invention, permettant la mise en oeuvre de l'annulation de signaux interférents co-canaux et canaux adjacents d'une onde électromagnétique modulée en fréquence conformément au mode opératoire décrit pour le procédé selon l'invention en liaison avec les figures 1 et 2b, sera maintenant donné en référence aux figures 4a et 4b.

Sur la figure 4a, on indique que les mêmes références désignent les mêmes éléments que dans le cas de la figure 3a.

Outre les éléments précités, on peut observer sur la figure 4a que les modules de filtrage non linéaires 402 et 302 comportent avantageusement, en outre, une boucle à verrouillage de phase portant la référence 4023, respectivement 3023, recevant le signal d'argument de phase $\exp(j\Phi_{0n})$ respectivement $\exp(j\Phi_{1n})$ délivrés par les modules de conversion de coordonnées cartésiennes en coordonnées polaires 4020 et 3020 respectivement. Les modules 4023 et 3023 délivrent un signal représentatif de la dérivée temporelle du signal d'argument de phase précité, ces signaux respectifs étant repérés par $\theta_{0n}$ et $\theta_{1n}$ respectivement pour les modules 4023 et 3023.

Conformément à un aspect particulièrement avantageux du dispositif objet de la présente invention dans le deuxième mode de réalisation représenté en figure 4a, ces signaux représentatifs de la dérivée temporelle du signal d'argument de phase du signal numérique complexe source $X_{0n}$, $Y_{0n}$ et du signal numérique complexe d'interférence $X_{1n}$, $Y_{1n}$ constituent alors, pour le module de filtrage non linéaire 302, les signaux interférents discriminés. On indique que dans ce cas, le signal $\theta_{1n}$ ne constitue plus un signal numérique complexe mais un signal numérique à valeur simplement réelle, lequel est délivré au module 31 d'estimation des signaux d'interférence pour la période d'échantillonnage courante.

On comprend en particulier qu'en raison du caractère réel des valeurs transmises par le signal $\theta_{1n}$ précité, le filtre adaptatif proprement dit est un filtre simple et non un filtre complexe, et, qu'à ce titre, la mise en oeuvre de ce dernier nécessite un nombre réduit dans un rapport 2 de coefficients adaptables.

Dans le cas du mode de réalisation représenté en figure 4a, l'estimation du signal d'interférence estimé $\hat{X}_{1n-1}$, $\hat{Y}_{1n-1}$ pour la période d'échantillonnage courante est alors effectuée sur la base d'un filtrage adaptatif piloté par une estimation notée $\hat{\theta}_{1n}$ délivrée directement par le filtre adaptatif proprement dit 310, ce signal estimé correspondant à une valeur estimée sur la période d'échantillonnage courante du paramètre de dérivée temporelle du signal d'argument de phase précité du signal interférent.

Ainsi que représenté sur la figure 4a précitée, le pilotage du filtrage adaptatif est alors effectué sur la base de ce signal estimé $\hat{\theta}_{1n}$ par l'intermédiaire d'un circuit retardateur supplémentaire noté 313a, lequel permet de délivrer alors un signal de dérivée temporelle estimé pour la période d'échantillonnage courante, noté $\hat{\theta}_{1n-1}$, au circuit soustracteur 313. Ce circuit soustracteur permet de délivrer le signal d'erreur à partir du signal représentatif de la dérivée temporelle du signal d'argument de phase noté $\theta_{1n}$ pour la période d'échantillonnage courante.

Outre la modification précédente relativement au processus de pilotage du filtre adaptatif proprement dit 310, on indique que le module de reconstruction 311 peut alors consister, ainsi que représenté sur la figure 4a, en un module de reconstruction proprement dit 3112 permettant d'effectuer directement un calcul de l'argument de phase des signaux interférents estimés sur la période d'échantillonnage courante. Le module 3112 reçoit, d'une part, la valeur estimée du paramètre de dérivée temporelle de l'argument de phase $\theta_{1n}$ sur la période d'échantillonnage courante, et, d'autre part, un paramètre noté $\Psi_{1n}$ représentatif de l'argument de phase estimé du signal d'argument de phase d'un oscillateur local utilisé pour la mise en oeuvre de la boucle à verrouillage de phase 3023 précédemment citée.

Bien que les boucles à verrouillage de phase soient de structure connue de l'art antérieur, sur la figure 4b, on a représenté une boucle à verrouillage de phase susceptible d'être utilisée pour réaliser le module de boucle à verrouillage de phase 3023 afin de préciser les notations correspondantes. Le module de reconstruction proprement dit 3112 calcule directement l'expression d'argument de phase $\exp(j\hat{\Psi}_{1n-1}+\hat{\theta}_{1n})$. Enfin, le module de reconstruction proprement dit 3112 reçoit un signal représentatif du module filtré Afin pour la période d'échantillonnage courante délivré par le filtre passe-bas 3021, ce signal étant représentatif du module ou de l'enveloppe du signal numérique complexe d'interférence à module sensiblement constant, ainsi que décrit précédemment dans la description. Le module de reconstruction 3112 délivre alors, de manière semblable à celle du module 3112 représenté en figure 3a, la valeur des signaux d'interférence estimés sur la période d'échantillonnage courante vérifiant la relation :

$$\hat{S}_{1n} = Af_{1n}.\exp(j\hat{\Phi}_{1n})$$

c'est-à-dire en fait les valeurs des composantes réelles et imaginaires $\hat{X}_{1n}$ et $\hat{Y}_{1n}$ au circuit de retard d'une période d'échantillonnage 312, jouant dans la figure 4a le même rôle que dans la figure 3a.

Bien entendu, on indique que les filtres passe-bas 4021 et 3021 utilisés dans le deuxième mode de réalisation du dispositif, objet de la présente invention, tel que représenté en figure 4a, sont identiques aux mêmes filtres passe-bas portant les mêmes références dans le cas du premier mode de réalisation représenté en figure 3a.

En outre, on indique que dans les deux modes de réalisation, le filtre adaptatif 310 peut être constitué par un filtre à vingt coefficients, vingt coefficients pour la partie non récursive du filtre adaptatif précité et vingt coefficients pour la partie récursive de celui-ci. Ces coefficients sont remis à jour à l'aide de l'algorithme du gradient par exemple, méthode connue sous le nom de LMS en langage anglo-saxon. Dans le cas du premier mode de réalisation de la figure 3a, les coefficients sont en fait complexes car le filtre doit procéder au filtrage des signaux complexes précités, alors que dans le second mode de réalisation tel que représenté en figure 4a, les coefficients sont simplement réels, ce qui simplifie de manière particulièrement avantageuse la réalisation pratique du filtre adaptatif précité.

On a ainsi décrit un procédé et un dispositif d'annulation de signaux interférents co-canaux et canaux adjacents d'une onde électromagnétique modulée en fréquence représentative d'un signal source particulièrement performants dans la mesure où, tant le procédé que le système objets de la présente invention, permettent d'annuler les échos indésirables grâce à la possibilité de différencier les différentes sources.

On rappelle que ces échos ou ces signaux interférents peuvent avoir plusieurs origines, en ville, en réflexion sur les immeubles ou obstacles artificiels à la propagation des ondes électromagnétiques, et en milieu rural, sur le relief naturel.

Ces systèmes s'appliquent également à des situations dans lesquelles il existe des échos provoqués, ce qui est en particulier le cas pour les émissions en modulation de fréquence sur le réseau autoroutier en France où les émissions sont sur porteuse unique à une fréquence de 107.7 MHz.

On indique enfin que le processus utilisé a la propriété d'estimer des signaux interférents co-canaux ou canaux adjacents pour la période d'échantillonnage courante, et que l'amélioration de la réception ne s'effectue en aucun cas au détriment de l'émission dans la mesure où le procédé et le dispositif, objets de la présente invention, ne provoquent aucune modification au niveau du signal source discriminé.

En outre, bien que l'audition des signaux interférents canaux adjacents présente un intérêt avant tout indicatif, le procédé objet de la présente invention et le dispositif permettant la mise en oeuvre de celui-ci apparaissent particulièrement avantageux dans la mesure où, en raison de la séparation même du signal source et, le cas échéant, de l'ensemble ou de chacun des signaux interférents, le problème du manque de sélectivité du récepteur FM utilisé est donc sensiblement supprimé.

**Revendications**

1. Procédé d'annulation de signaux interférents co-canaux et canaux adjacents d'une onde électromagnétique modulée en fréquence représentative d'un signal source, consistant, suite à une étape de transformation de ladite onde électromagnétique modulée en fréquence par transposition en un signal à fréquence intermédiaire, à transformer ledit signal à fréquence intermédiaire en un signal numérique par échantillonnage et conversion analogique-numérique de période T, ledit signal numérique étant formé d'une suite d'échantillons numériques successifs et à transformer ledit signal numérique en un signal numérique complexe, comportant une partie réelle et une partie imaginaire, caractérisé en ce qu'il consiste en outre :

   - à discriminer pour chaque échantillon de période courante l'ensemble des signaux interférents co-canaux et canaux adjacents pour engendrer des signaux interférents discriminés par estimation par un filtrage adaptatif de l'ensemble des signaux interférents sur au moins la période d'échantillonnage précédant ladite période d'échantillonnage courante, ledit filtrage adaptatif étant réalisé en fonction de l'erreur entre signaux interférents discriminés et les signaux interférents estimés ;
   - à corriger ledit signal numérique complexe à partir des signaux interférents estimés pour délivrer un signal utile.

2. Procédé selon la revendication 1, caractérisé en ce que l'étape consistant à discriminer sur chaque échantillon de période courante l'ensemble des signaux interférents co-canaux et canaux adjacents pour engendrer des signaux interférents discriminés par estimation par un filtrage adaptatif consiste :

   - à engendrer un signal interférent estimé à partir dudit filtrage adaptatif desdits signaux interférents discriminés sur au moins la période d'échantillonnage précédant la période d'échantillonnage courante ;
   - à engendrer un signal numérique complexe source par différence entre ledit signal numérique complexe et ledit signal interférent estimé ;
   - à soumettre ledit signal numérique complexe source à un premier filtrage non linéaire permettant d'engendrer un signal numérique complexe source à module sensiblement constant ;
   - à engendrer un signal numérique complexe d'interférence par différence entre ledit signal numérique complexe et ledit signal numérique complexe source à module sensiblement constant ;
   - à soumettre ledit signal numérique complexe d'interférence à un deuxième filtrage non linéaire permettant d'engendrer un signal complexe d'interférence à module sensiblement constant, constituant lesdits signaux interférents discriminés.

3. Procédé selon la revendication 2, caractérisé en ce que lesdits premier et deuxième filtrages non linéaires consistent à appliquer sur le module dudit signal numérique complexe source, respectivement d'interférence, un premier, respectivement un deuxième filtrage passe-bas dont le rapport des fréquences de coupure $fc_1/fc_2$ est inférieur ou égal à 1.

4. Procédé selon la revendication 2, caractérisé en ce que l'étape consistant à discriminer sur chaque échantillon de période courante l'ensemble des signaux interférents co-canaux et canaux adjacents pour engendrer des signaux interférents discriminés par estimation par un filtrage adaptatif consiste :

   - à engendrer un signal estimé à partir dudit filtrage adaptatif desdits signaux interférents discriminés sur au moins la période d'échantillonnage précédant la période d'échantillonnage courante ;
   - à engendrer un signal numérique complexe source par différence entre ledit signal numérique complexe et ledit signal interférent estimé ;

- à soumettre ledit signal numérique complexe source à un premier filtrage non linéaire permettant d'engendrer un signal numérique complexe source à module sensiblement constant ;
- à engendrer un signal numérique complexe d'interférence par différence entre ledit signal numérique complexe et ledit signal numérique complexe source à module sensiblement constant ;
- à soumettre ledit signal numérique complexe d'interférence à un deuxième filtrage non linéaire permettant d'engendrer un signal complexe d'interférence à module sensiblement constant ;
- à engendrer un signal représentatif de la dérivée temporelle de l'argument de phase dudit signal numérique complexe d'interférence, ledit signal représentatif de la dérivée temporelle constituant lesdits signaux interférents discriminés.

5. Dispositif d'annulation de signaux interférents co-canaux et canaux adjacents d'une onde électromagnétique modulée en fréquence, ce dispositif interconnecté à la sortie de l'étage à fréquence intermédiaire d'un récepteur délivrant un signal à fréquence intermédiaire, comportant des moyens de conversion analogique-numérique délivrant, à partir dudit signal à fréquence intermédiaire, un signal numérique formé d'une suite d'échantillons numérisés successifs, avec une période d'échantillonnage T et des moyens de transformation dudit signal numérique en un signal numérique complexe, comportant une partie réelle et une partie imaginaire, et délivrant ledit signal numérique complexe, caractérisé en ce qu'il comporte en outre :

- des moyens discriminateurs sur chaque échantillon de période courante de l'ensemble des signaux interférents co-canaux et canaux adjacents, permettant d'engendrer des signaux interférents discriminés par estimation par un filtrage adaptatif de l'ensemble des signaux interférents sur au moins la période d'échantillonnage précédant ladite période d'échantillonnage courante, ledit filtrage adaptatif étant réalisé en fonction de l'erreur entre les signaux interférents discriminés et les signaux interférents estimés ;
- des moyens de correction dudit signal numérique complexe à partir des signaux interférents estimés, lesdits moyens de correction permettant de délivrer un signal utile correspondant à l'onde électromagnétique modulée en fréquence dans laquelle les signaux interférents co-canaux et canaux adjacents ont été supprimés.

6. Dispositif selon la revendication 5, caractérisé en ce que lesdits moyens de transformation dudit signal numérique en un signal numérique complexe comprennent :

- un filtre de Hilbert recevant ledit signal numérique délivrant un signal numérique filtré ;
- un circuit de retard recevant ledit signal numérique délivrant un signal numérique retardé ;
- des moyens de transposition à fréquence nulle recevant ledit signal numérique filtré et ledit signal numérique retardé et délivrant ledit signal numérique complexe, comportant une partie réelle et une partie imaginaire.

7. Dispositif selon l'une des revendications 5 ou 6, caractérisé en ce que lesdits moyens discriminateurs et lesdits moyens de correction comportent au moins :

- des moyens soustracteurs/discriminateurs recevant, d'une part, ledit signal corrigé et, d'autre part, ledit signal numérique complexe et délivrant lesdits signaux interférents discriminés pour ladite période d'échantillonnage courante ;
- des moyens d'estimation desdits signaux interférents estimés pour ladite période d'échantillonnage courante, lesdits moyens d'estimation recevant lesdits signaux interférents discriminés pour ladite période d'échantillonnage courante et délivrant lesdits signaux interférents estimés pour ladite période d'échantillonnage courante étant pilotés par le signal d'erreur entre lesdits signaux interférents estimés sur au moins ladite période d'échantillonnage précédente, respectivement discriminés ;
- des moyens soustracteurs/correcteurs recevant, d'une part, ledit signal numérique complexe, et, d'autre part, les signaux interférents estimés sur au moins la période d'échantillonnage précédente et délivrant un signal corrigé complexe comportant une partie réelle et une partie imaginaire, constitutives dudit signal corrigé.

8. Dispositif selon la revendication 7, caractérisé en ce que lesdits moyens d'estimation desdits signaux interférents estimés pour ladite période d'échantillonnage courante comportent :

- un filtre adaptatif recevant sur son entrée de filtrage lesdits signaux interférents discriminés pour ladite période d'échantillonnage courante, ledit filtre adaptatif délivrant des signaux interférents filtrés pour ladite période d'échantillonnage courante ;
- des moyens de reconstruction recevant lesdits signaux interférents filtrés et délivrant des signaux interférents estimés sur ladite période d'échantillonnage courante ;

- un circuit retardateur d'au moins une période d'échantillonnage recevant lesdits signaux interférents estimés sur ladite période d'échantillonnage courante et délivrant lesdits signaux interférents estimés sur au moins ladite période d'échantillonnage précédente constitutifs des signaux interférents estimés pour ladite période d'échantillonnage courante ;
- des moyens soustracteurs recevant, d'une part, lesdits signaux interférents discriminés pour ladite période d'échantillonnage courante, et, d'autre part, lesdits signaux interférents estimés sur au moins ladite période d'échantillonnage précédente et délivrant un signal d'erreur de pilotage audit filtre adaptatif.

9. Dispositif selon l'une des revendications 5 à 8 précédentes, caractérisé en ce que celui-ci comporte en outre :

- un module d'extraction dudit signal utile sous forme d'un multiplex pour chaque période d'échantillonnage à partir de la partie réelle et de la partie imaginaire du signal corrigé complexe ;
- un module d'extraction des signaux interférents sous forme d'un multiplex.

10. Dispositif selon la revendication 7, caractérisé en ce que lesdits moyens soustracteurs/correcteurs comportent au moins :

- un module soustracteur complexe recevant ledit signal numérique complexe et ledit signal interférent estimé et délivrant un signal numérique complexe source ;
- un premier module de filtrage non linéaire recevant ledit signal numérique complexe source et délivrant un signal numérique complexe source à module sensiblement constant.

11. Dispositif selon la revendication 7, caractérisé en ce que lesdits moyens soustracteurs/discriminateurs comportent au moins :

- un module soustracteur complexe recevant ledit signal numérique complexe source à module sensiblement constant et délivrant un signal numérique complexe d'interférence ;
- un deuxième module de filtrage non linéaire recevant ledit signal numérique complexe et ledit signal numérique complexe d'interférence et délivrant un signal numérique complexe d'interférence à module sensiblement constant.

12. Dispositif selon la revendication 10 ou 11, caractérisé en ce que le premier et le deuxième module de filtrage non linéaire comprend :

- un module de conversion coordonnées cartésiennes/polaires recevant le signal numérique complexe source, respectivement d'interférence, et délivrant un signal de module respectivement d'argument de phase correspondant ;
- un filtre passe-bas recevant ledit signal de module et délivrant un signal de module filtré ;
- un module de reconstruction recevant ledit signal de module filtré et ledit signal d'argument de phase correspondant et délivrant ledit signal numérique source, respectivement d'interférence à module sensiblement constant.

13. Dispositif selon la revendication 12, caractérisé en ce que le premier et le deuxième filtrage non linéaire comportent en outre une boucle à verrouillage de phase recevant ledit signal d'argument de phase et délivrant un signal représentatif de la dérivée temporelle dudit signal d'argument de phase, constituant pour le deuxième module de filtrage non linéaire lesdits signaux interférents discriminés.

14. Dispositif selon les revendications 8 et 12, caractérisé en ce que lesdits moyens de reconstruction comportent au moins un module de reconstruction des signaux interférents estimés recevant lesdits signaux interférents filtrés délivrés par ledit filtre adaptatif.

15. Dispositif selon les revendications 13 et 14, caractérisé en ce que, ledit signal représentatif de la dérivée temporelle dudit signal d'argument de phase étant délivré par ladite boucle à verrouillage de phase avec un signal d'argument de phase de l'oscillateur local de cette boucle à verrouillage de phase, et ledit filtre adaptatif recevant ce signal représentatif de la dérivée temporelle dudit signal d'argument de phase, constituant lesdits signaux interférents discriminés, ledit filtre adaptatif délivrant un signal d'argument de phase estimé, lesdits moyens de reconstruction comportent en outre un module de calcul de l'argument de phase des signaux interférents estimés, ledit module de calcul recevant ledit signal d'argument de phase estimé et ledit signal d'argument de phase de l'oscillateur local et délivrant un signal d'argument de phase de reconstruction desdits signaux interférents estimés.

FIG.1.

```
┌─────────────────────────────┐
│  TRANSPOSITION À FRÉQUENCE   │── 1000
│       INTERMÉDIAIRE          │
└─────────────────────────────┘
              │ F.I.
              ▼
┌─────────────────────────────┐
│   ÉCHANTILLONNAGE  DE        │── 1001
│       PÉRIODE  T             │
└─────────────────────────────┘
              │ s n
              ▼
┌─────────────────────────────┐
│   TRANSFORMATION  EN         │
│   SIGNAL  NUMÉRIQUE          │── 1002
│   COMPLEXE  Xe,Ye            │
└─────────────────────────────┘
```

$Xen, Yen$    snc

```
┌──────────────────────────────────────────┐
│  ┌ ─ ─ ─ ─ ─ ─ ─ ─ ─ ─ ─ ─ ─ ─ ─┐        │
│  │     DISCRIMINATION          │── 1003a  │
│  └ ─ ─ ─ ─ ─ ─ ─ ─ ─ ─ ─ ─ ─ ─ ─┘        │── 1003
│            │                              │
│  1003b  $X_{1n}, Y_{1n}$          1003c   │
│  ┌ ─ ─ ─ ─ ─ ─ ─ ─ ─ ─ ─ ─ ┐    ( − )    │
│  │ ESTIMATION PAR FILTRAGE │   (  +  )   │
│  │ ADAPTATIF               │    ( + )    │
│  └ ─ ─ ─ ─ ─ ─ ─ ─ ─ ─ ─ ─ ┘             │
│        $\widehat{X}_{1n-1}, \widehat{Y}_{1n-1}$  │
└──────────────────────────────────────────┘
```

1006

$\widehat{X}_{1n-1}, \widehat{Y}_{1n-1}$

```
┌─────────────────────────────┐
│  CORRECTION                 │
│  $Xon = Xen - \widehat{X}_{1n-1}$  │── 1004
│  $Yon = Yen - \widehat{Y}_{1n-1}$  │
└─────────────────────────────┘
```

$Xon, Yon$

```
┌─────────────────────────────┐
│   SIGNAL  UTILE             │── 1005
│   POUR  EXPLOITATION        │
└─────────────────────────────┘
```

14

FIG.2a.

FIG.2b.

# FIG.3a.

SIGNAL
D'ENTRÉE

$\hat{X1n}_1, \hat{Y1n}_1$

Xen

Yen

$+$ 401

Xon | Yon

402

4020

4021 | A0n | exp(j$\phi$0n)

SIGNAL UTILE

4022 | S0 = Af0 * exp(j$\phi$0)

Afo

1 | 2 | Xen

FI

sn

Yen

Xon,Yon

$+$ 301

X1n | Y1n

302

3020 | 30

3021 | A1n | exp(j$\phi$1n)

3022

Af1n

S1 = Af1 * exp(j$\phi$1)

$\overline{X1n}$

$\overline{Y1n}$

z-1 | 312

$\hat{X1n}, \hat{Y1n}$

S1 = Af2n exp(j$\phi$2n)

Af2n | 3112

3111

A2n | exp(j$\phi$2n)

3110

X1nf | Y1nf

311

ERREUR | H FILTRE ADAPTATIF | 310

313

31

3

## FIG.3b.

TRANSPOSEUR RF/FI

CONVERSION ANALOGIQUE-NUMÉRIQUE

RF | FI

FI | 1

sn

FILTRE DE HILBERT | 20 | snf

MULTIPLIEUR COMPLEXE

X | Xen PARTIE RÉELLE

21 | BLOC RETARD | snr | Yen PARTIE IMAGINAIRE

$e^{j\varphi}$

OSCILLATEUR | 2

REPRÉSENTATION SPECTRALE DU SIGNAL MULTIPLEX

AMPLITUDE

FIG.3c.

SIGNAL AUDIO
GAUCHE+DROITE

SIGNAL AUDIO
GAUCHE-DROITE

SIGNAL
PILOTE

SIGNAL
RDS

FRÉQUENCE
EN kHz

0     19      38      57

FIG.4a.

SIGNAL D'ENTRÉE

$\hat{X}1n\_1$

$\hat{Y}1n\_1$

FIG.4b.

Office européen
des brevets

**RAPPORT DE RECHERCHE EUROPEENNE**

Numéro de la demande

EP 97 40 2600

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | EP 0 444 322 A (BLAUPUNKT WERKE GMBH) 4 septembre 1991 | 1,5 | H04B1/12 |
| Y | * page 3, ligne 5 - page 4, ligne 43; figure 1 * | 2,3,7,9 | |
| A | | 4,6,8, 10-15 | |
| | --- | | |
| A | HEDSTROM B A ET AL: "ADAPTIVE CANCELLATION OF ADJACENT CHANNEL INTERFERENCE" PROCEEDINGS OF THE PACIFIC RIM CONFERENCE ON COMMUNICATIONS, COMPUTERS AND SIGNAL PROCESSING, VICTORIA, JUNE 1 - 2, 1989, no. -, 1 juin 1989, INSTITUTE OF ELECTRICAL AND ELECTRONICS ENGINEERS, pages 577-579, XP000077547 * le document en entier * | 1,2,5-8 | |
| | --- | | |
| Y | US 5 307 517 A (RICH DAVID A) 26 avril 1994 | 2,3,7,9 | |
| A | * abrégé; figure 5 * | 1,4,6,8, 10-15 | **DOMAINES TECHNIQUES RECHERCHES (Int.Cl.6)** |
| | ----- | | H04B |

Le présent rapport a été établi pour toutes les revendications

| Lieu de la recherche | Date d'achèvement de la recherche | Examinateur |
|---|---|---|
| LA HAYE | 6 février 1998 | Andersen, J.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)